Europäisches Patentamt

European Patent Office

Office européen des brevets

(19)

(11) Veröffentlichungsnummer : **0 092 101**
**B1**

(12) **EUROPÄISCHE PATENTSCHRIFT**

(45) Veröffentlichungstag der Patentschrift :
22.01.86

(51) Int. Cl.⁴ : **G 01 N 31/22**

(21) Anmeldenummer : 83103324.6

(22) Anmeldetag : 06.04.83

(54) **Plakette zur Dosimetrie von reaktiven Gasen für den Arbeitsschutz beim Umgang mit gefährlichen Arbeitsstoffen.**

(30) Priorität : 14.04.82 DE 3213661

(43) Veröffentlichungstag der Anmeldung :
26.10.83 Patentblatt 83/43

(45) Bekanntmachung des Hinweises auf die Patenterteilung : 22.01.86 Patentblatt 86/04

(84) Benannte Vertragsstaaten :
AT BE CH DE FR GB IT LI NL SE

(56) Entgegenhaltungen :
EP-A- 0 010 160
US-A- 4 272 480

(73) Patentinhaber : BAYER AG
Konzernverwaltung RP Patentabteilung
D-5090 Leverkusen 1 Bayerwerk (DE)

(72) Erfinder : Diller, Werner, Prof., Dr.
Elisabeth-Langgässer-Strasse 8
D-5090 Leverkusen (DE)
Erfinder : Drope, Eckard, Dr.
Frankenstrasse 18
D-5000 Köln 40 (DE)
Erfinder : Ellendt, Günther, Dr.
Deswatinesstrasse 81
D-4150 Krefeld (DE)
Erfinder : Reichold, Ernst, Dr.
Deswatinesstrasse 88
D-4150 Krefeld (DE)
Erfinder : Keggenhoff, Berthold, Dr.
Im Paradies 32
D-4150 Krefeld (DE)

## Beschreibung

Die Erfindung betrifft eine Plakette zur schnellen Erkennung einer Dosis von reaktiven Gasen oder Dämpfen, insbesondere von gesundheitsschädlichen Gasen mit verzögertem Wirkungseintritt.

Derartige Plaketten werden in der chemischen Industrie als persönliche Dosimeter von solchen Personen getragen, die der Einwirkung gesundheitsschädlicher Stoffe ausgesetzt sind.

Die Wirkungsweise der Plakette beruht auf der Verfärbung eines Indikators bei der Einwirkung des gefährlichen Arbeitsstoffes, den er anzeigen soll. Die Plaketten ermöglichen es, ohne apparative Hilfsmittel und zeitraubende Analysen die Exposition eines Mitarbeiters abzuschätzen.

Hierzu ist die Plakette in mehrere Felder unterteilt, die eine abgestufte Anzeige für verschiedene Dosisbereiche ermöglichen. Im Bedarfsfall kann damit beim Verdacht einer Intoxikation eine optimale Therapie eingeleitet werden.

Eine Plakette dieser Art ist in der EP-A-00 10 160 beschrieben. Die Unterteilung in verschiedene Meßfelder geschieht durch stufenförmige Abdeckung der Indikatorfläche mit einer Schicht, die als Diffusionswiderstand wirkt. Je dicker die Schicht, desto größer ist die Abschwächung des auf die Indikatorfläche treffenden Gasstromes. Neben einem Meßfeld mit sehr hoher Empfindlichkeit (Indikatorfläche nicht abgedeckt) sind bei dieser Plakette noch weitere Meßfelder geringerer Empfindlichkeit für eine höhere Gasdosis vorgesehen, bei denen die Indikatorfläche in einer bzw. in mehreren Schichten mit einer Diffusionsmembran abgedeckt ist.

Für die Praxis der Auswertung ohne zusätzlichen apparativen und analytischen Aufwand ist die Abstufung der verschiedenen Dosisbereiche durch Abdecken mit reinen Diffusionsschichten jedoch unzureichend, da sie keine scharfe Trennung von Dosisbereichen in Folge einer zwar abgeschwächten, aber nicht grundsätzlichen Unterdrückung des Durchtritts einer bestimmten Dosis ermöglicht.

Die Abstufung der Farbintensitäten auf den einzelnen Meßfeldern ist bei der Verwendung reiner Diffusionsschichten nur graduell und eine genaue Zuordnung zu verschiedenen Dosisbereichen damit nur schwer möglich.

Dies ist besonders dann der Fall, wenn die Dosen eine hohe Farbsättigung des Indikatorpapiers bewirkt haben.

In der FR-PS 1 104 835 wird ein Kohlenmonoxid-Detektor beschrieben, der auf der Verfärbung eines Indikatorstreifens durch das Kohlenmonoxid-Gas beruht. Bei diesem Detektor ist einem Meßbereich jeweils ein bestimmtes Meßfeld zugeordnet. Die Meßfelder werden nebeneinander angeordnet. Auf der einen Seite befinden sich die Meßfelder mit hoher Empfindlichkeit, die sich bereits bei einer geringen Dosis verfärben, während auf der anderen Seite die Meßfelder mit geringer Empfindlichkeit angeordnet sind, bei denen die Verfärbung erst bei einer sehr hohen Dosis einsetzt. Jedes Meßfeld muß für sich nach einer bestimmten Rezeptur präpariert werden. Der Herstellungsaufwand für eine auf diesem Prinzip beruhende Plakette ist daher relativ groß.

In dem US-Patent 3 723 064 wird ein Schichtsystem zur Konzentrationsbestimmung eines Stoffes in einer Flüssigkeit beschrieben. Ähnlich wie bei dem Detektor der FR-PS-1 104 835 sind Meßfelder für unterschiedliche Konzentrationsbereiche nebeneinander angeordnet. Das Schichtsystem besteht im wesentlichen aus drei Schichten, einer Indikatorschicht, einer vorgelagerten Permeationsschicht, die in Felder mit unterschiedlichem Permeationsvermögen unterteilt ist und einer davor angeordneten Reaktionsschicht.

Die Konzentrationsbestimmung beruht nun darauf, daß die gesuchte Komponente in der Reaktionsschicht in eine chemische Verbindung überführt wird, die überhaupt erst mit der Indikatorschicht reagieren kann, und die anschließend durch die Permeationsschicht wandert und in der Indikatorschicht eine Verfärbung hervorruft. Abgesehen davon, daß es sich um einen relativ komplizierten Schichtaufbau handelt, der technisch nur mit großem Aufwand zu realisieren ist, ist die saubere Abgrenzung der Meßfelder bei der Auswertung des Indikatorstreifens problematisch. Vor allem bei der Ausdehnung dieses Meßprinzips auf die Dosisbestimmung von Gasen ist damit zu rechnen, daß die Übergänge zwischen den Meßfeldern auf dem Indikatorstreifen verwaschen sind, was unter Umständen zu falschen Aussagen bei der visuellen Auswertung führt.

Der Erfindung liegt die Aufgabe zugrunde, im Rahmen des Arbeitsschutzes der chemischen Industrie eine Plakette zur Früherkennung der Exposition von Mitarbeitern gegen gesundheitsschädliche Gase oder Dämpfe zu entwickeln, die aufgrund einer rein visuellen Betrachtung eine schnelle und eindeutige Klassifizierung der Exposition in mehrere vorgegebene, durch die medizinische Dosiswirkungsrelation bestimmte Dosisteilbereiche erlaubt. Außerdem sollte die Plakette mit Hilfe der modernen Methoden der Massenfabrikation leicht und preiswert herzustellen sein. Die bekannten Plaketten genügen diesen Anforderungen nicht.

Gelöst wird diese Aufgabe durch eine Plakette zur Dosimetrie nach Anspruch 1.

Die Indikatorfläche ist durch unterschiedliche Abdeckungen mit Abdeckschichten in zwei oder mehrere Meßfelder unterteilt und die Abdeckschichten sind mit dem gleichen Indikator, wie die Indikatorfläche selbst so imprägniert, daß die Imprägnierung eine vorher festgelegte Dosis des reaktiven Gases verbraucht, und dann erst das reaktive Gas auf die Indikatorfläche selbst hindurchdiffundieren läßt. Zur Vermeidung einer Diffusion von Indikatorreagenz bei Berührung und der damit verbundenen Veränderung der Empfindlichkeit ist zwischen Indikatorfläche und Abdeckschicht ein Luftspalt angeordnet.

Überraschenderweise wurde gefunden, daß der Punkt, an dem das Reagenz in den imprägnierten Abdeckschichten verbraucht ist, und die Abdeckschicht damit gasdurchlässig zu werden beginnt, relativ scharf definiert ist.

Die Zuordnung der Exposition zu den vorgegebenen Dosisteilbereichen ergibt sich daraus, unter welcher Abdeckschicht und wieweit die Indikatorfläche verfärbt ist.

Die gewünschte Abstufung der Meßbereiche läßt sich dadurch in vorteilhafter Weise einstellen, daß die Konzentrationen des Indikators in der Abdeckschicht und damit die Durchschlagspunkte entsprechend abgestuft werden. Eine niedrigere Indikatorkonzentration führt zu einer früheren Sättigung und damit zu einem erniedrigten Durchschlagspunkt. Die Anfärbung der darauffolgenden Indikatorfläche setzt dann zu einem früheren Zeitpunkt, d. h. bei einer niedrigeren Dosis ein.

Bei einer bevorzugten Ausführung der Erfindung besitzt die Plakette zwei Eintrittsfenster für das nachzuweisende Gas. Hinter dem ersten Fenster ist nur die offene Indikatorfläche vorgesehen, während hinter dem zweiten Fenster vor der Indikatorfläche eine Abdeckschicht angeordnet ist, deren Imprägnierung eine definierte Dosis des Schadgases absorbiert. Für eine Erweiterung des Meßbereiches können auch mehrere Abdeckschichten übereinander angeordnete werden. Tritt eine Verfärbung in den Fenstern auf, so wird die Plakette geöffnet und zur Klassifizierung der Dosis dann auch die Verfärbung der abgedeckten Indikatorfläche hinter der zweiten Fenster herangezogen.

Der Vorteil der Erfindung liegt in der erheblich verbesserten Aussagekraft der Plakette, wobei dieser Fortschritt nicht mit einer wesentlich komplizierteren Herstellung erkauft werden muß.

Das zugrunde liegende Prinzip der unterteilten Dosisanzeige auf Basis der hintereinander geschalteten, mit dem Indikator imprägnierten Abdeckschichten ist nicht stoffspezifisch beschränkt, sondern kann auf beliebige reaktive Gase ausgedehnt werden.

Im folgenden wird ein Ausführungsbeispiel der Erfindung anhand einer Zeichnung näher erläutert.

Es zeigen :

Figur 1 eine bevorzugte Ausführungsform der Plakette in Draufsicht,

Figur 2 einen Schnitt durch die Plakette nach Fig. 1,

Figur 3 den Durchschlagspunkt (Gasaufnahmevermögen) der Indikatorschicht in Abhängigkeit von der Reagenzkonzentration in der Imprägnierlösung,

Figur 4 ein schematisches Diagramm für die sukzessive Verfärbung der Meßfelder in der Plakette als Funktion der Gasdosis.

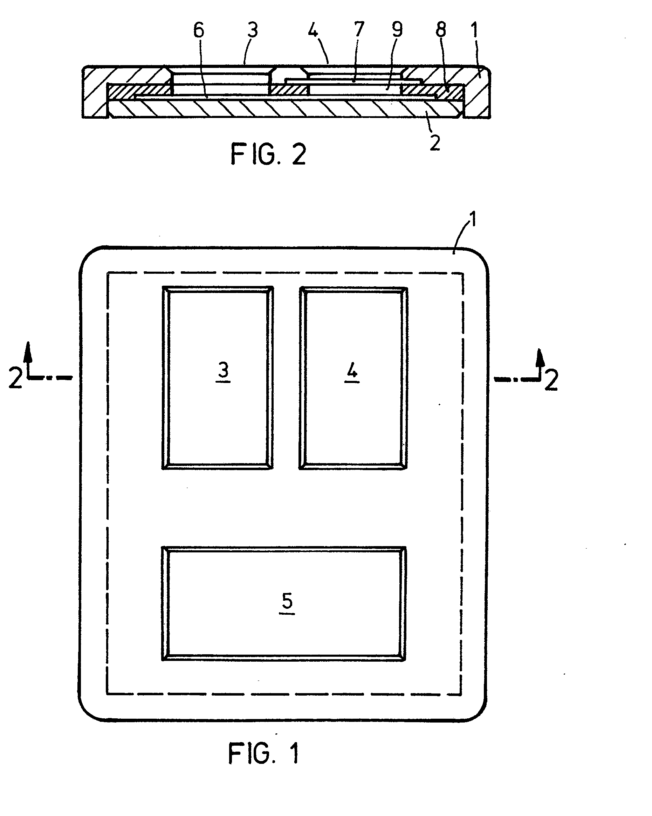

Die Plakette gemäß Fig. 1 und 2 besitzt ein quaderförmiges Gehäuse 1, das eine rechteckförmige Bodenplatte 2 umschließt. In der Vorderwand des Gehäuses 1 sind gegenüber der Bodenplatte rechteckförmige Fenster 3, 4 und 5 angebracht. Auf der Bodenplatte 2 liegt die Indikatorschicht 6, die sich über die gesamte Bodenfläche erstreckt. Das hinter dem Fenster 3 und 5 liegende Indikatorfeld ist direkt der Atmosphäre ausgesetzt. Im Gegensatz dazu ist hinter dem Fenster 4 eine Abdeckschicht 7 vor dem Indikatorfeld angeordnet. Eine Distanzscheibe 8 sorgt dafür, daß zwischen der Abdeckschicht 7 und der Indikatorschicht 6 hinter dem Fenster 4 ein Luftspalt 9 von 0,5 bis 2 mm verbleibt. Die Distanzscheibe 8 dient gleichzeitig als Halterung für die Indikatorschicht 6 auf der Bodenplatte 2. Der Zusammenbau der Plakette geht in der Weise vor sich, daß zuerst die Indikatorschicht 6 auf die Bodenplatte 2 gelegt und mit Hilfe der Distanzscheibe 8 fixiert wird, anschließend die Abdeckschicht 7 aufgelegt wird und dann das Gehäuse 1 aufgesetzt wird. An der Rückseite ist ein Clip angeordnet (nicht gezeigt), mit dem die Plakette an der Kleidung der zu sichernden Person befestigt wird. Die Bodenplatte 2 wird durch Rasten am Gehäuse 1 fixiert oder kann mit ihm verschweißt werden. Die Einzelteile der Plakette (ausgenommen die Indikatorschicht 6 und die Abdeckschicht 7) werden durch Spritzguß aus einem geeigneten Kunststoff hergestellt.

Zur Dosisbestimmung von Phosgen wird eine Indikatorschicht verwendet, die aus einem Papierstreifen besteht, der mit einer Lösung von 4-(4-Nitrobenzyl)-pyridin und N-Benzylanilin in Toluol getränkt und anschließend getrocknet wurde. Bei der Einwirkung von Phosgen auf diesen Indikator bildet sich eine rote Verfärbung, deren Intensität logarithmisch proportional ist dem Produkt von Phosgen-Konzentration und Einwirkungszeit (Dosis). Die Abdeckschicht 7 hinter dem Fenster 4 besteht aus einem Chromatographiepapier, das mit der gleichen Lösung imprägniert ist, wie die Indikatorschicht 6. Die Abdeckschicht 7 bewirkt, daß bei einer Exposition mit Phosgen das Phosgen zunächst in der Abdeckschicht 7 chemisorbiert wird und erst bei Erreichen der Sättigungsabsorption durch die Abdeckschicht hindurchdiffundiert. Die Imprägnierung in der Abdeckschicht verbraucht also erst eine bestimmte Gasdosis, bevor die Abdeckschicht 7 durchlässig zu werden beginnt.

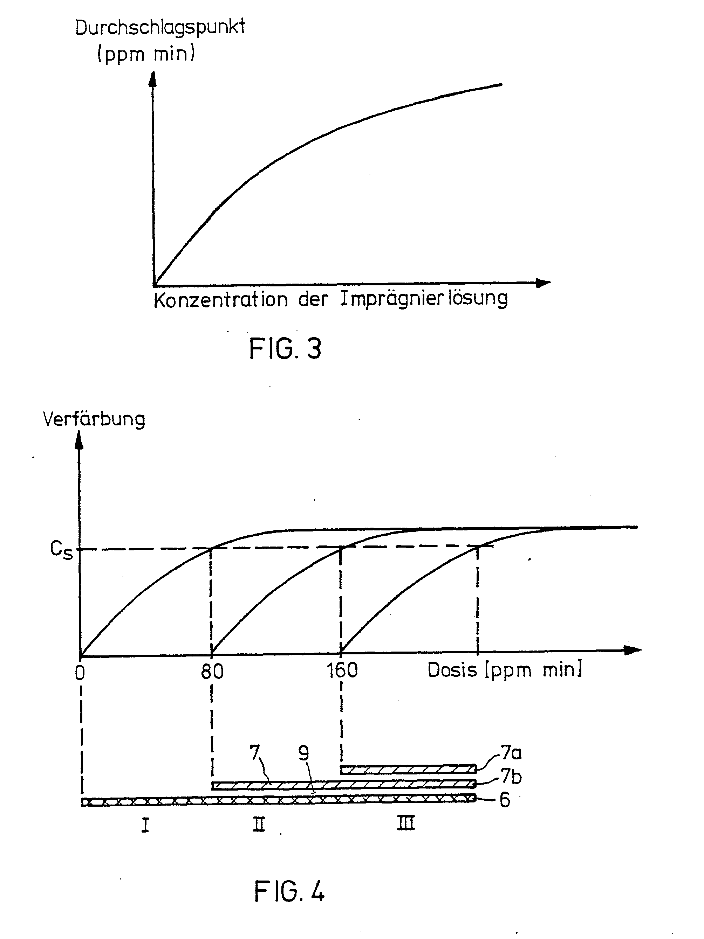

Der « Durchschlagspunkt », an dem das Reagenz in der Abdeckschicht gesättigt ist, ist überraschenderweise relativ scharf. Dieser Effekt wird nun ausgenutzt, um verschiedene Meßfelder mit abgestufter Empfindlichkeit zu schaffen. Man erhält z. B. eine Abdeckschicht mit einem Durchschlagspunkt bei einer Gasdosis von 300 ppm min, wenn man ein Chromatographiepapier mit einer Lösung von 0,33 g 4-(4-Nitrobenzyl)-pyridin und 0,66 g N-Benzylanilin in 99 g Toluol imprägniert und trocknet. Der Durchschlagspunkt der Abdeckschicht läßt sich also in definierter Weise über die Konzentration der Indikatorreagenzien einstellen. Die Fig. 3 zeigt den Durchschlagspunkt als Funktion der Indikatorkonzentration in der Lösung. Mit zunehmender Indikatorkonzentration wächst auch die Zahl der Absorptionszentren. Dementsprechend liegt der Durchschlagspunkt bei immer höheren Werten ; d. h. die Indikatorschicht kann mehr Gas aufnehmen, bevor sie durchlässig zu werden beginnt. Dabei ist allerdings eine Art Sättigungseffekt zu beobachten. Nur im Anfangsbereich besteht zwischen Durchschlagspunkt und Indikatorkonzentration in der Imprägnierlösung ein annähernd linearer Zusammenhang.

Der Luftspalt 9 zwischen Abdeckschicht 7 und Indikatorschicht 6 verhindert einen Austausch von Indikatorreagenz durch Diffusion zwischen Abdeckschicht und Indikatorschicht oder vice versa. Eine solche Abwanderung von Reagenz würde allmählich zu einer Änderung der Empfindlichkeit und damit zu einer Verfälschung des Meßbereiches führen.

In Fig. 1 und 2 entspricht das hinter dem Fenster 3 liegende Indikatorfeld dem empfindlichen Meßbereich, während das hinter dem Fenster 4 liegende Feld erst bei einer höheren Dosis anspricht. Das Fenster 5 hat hier keine meßtechnische Funktion. Es dient lediglich Kennzeichnungszwecken (Beschriftung oder Numerierung).

Die Unterteilung in verschiedene Meßfelder mit abgestuften Dosisbereichen wird noch einmal anhand von Fig. 4 verdeutlicht. Gemäß Fig. 4 ist die Verfärbung als Funktion der Dosis aufgetragen, wenn 3 Meßfelder I, II, III vorgesehen sind. Das Feld I ist frei. Dem Feld II sind eine und dem Feld III zwei aufeinanderfolgende Abdeckschichten 7 vorgeschaltet. Die Abdeckschichten sind wieder mit dem gleichen Reagenz imprägniert, wie die Indikatorschicht 6. Die Indikatorkonzentration in der Abdeckschicht 7 ist so gewählt, daß die Sättigungskonzentration $C_s$, d. h. die Gasdosis, bei der die Abdeckschicht durchlässig zu werden beginnt, bei etwa 80 ppm min liegt. Im Meßbereich von 0 bis 80 ppm min verfärbt sich also nur das Meßfeld I. Bei 80 ppm min ist der Durchschlagspunkt der Abdeckschicht 7 über dem Meßfeld II erreicht. Die darunter liegende Indikatorschicht beginnt sich bei weiterer Exposition anzufärben. Im Bereich des 3. Meßfeldes (III) ist zu diesem Zeitpunkt zwar die erste Abdeckschicht 7a schon durchlässig geworden. Das Gas wird jedoch von der darunter liegenden 2. Abdeckschicht 7b aufgefangen. Erst, wenn auch in dieser Abdeckschicht die Sättigungsdosis von 80 ppm min (in 7a und 7b zusammen 160 ppm min) erreicht ist, wird das dritte Indikatorfeld mit Gas beaufschlagt und beginnt sich zu verfärben. Aus diesem Beispiel wird ersichtlich, daß die Anfärbung der einzelnen Meßfelder als Funktion der Dosis nahezu stufenförmig erfolgt. Diese Tatsache erlaubt es, im Falle einer Exposition die zugehörige Dosis innerhalb von vorgegebenen Dosisteilbereichen durch visuelle Betrachtung der Meßfelder I bis III schnell und eindeutig zu klassifizieren. Die Festlegung der Dosisteilbereiche erfolgt gasspezifisch anhand der einschlägigen Arbeitsschutzbestimmungen. Maßgebend ist dabei die Dosiswirkungsrelation, die den Zusammenhang zwischen der Belastung mit einer

bestimmten Dosis eines Schadgases und der dadurch hervorgerufenen Intoxikation beschreibt.

## Patentansprüche

1. Plakette zur schnellen Erkennung einer Dosis eines reaktiven Gases oder Dampfes, insbesondere eines gesundheitsschädlichen Gases mit verzögertem Wirkungseintritt, auf Basis einer Indikatorfläche (6) die sich bei Einwirkung des Gases oder Dampfes verfärbt und durch unterschiedliche Abdeckung mit Abdeckschichten (7) in Meßfelder verschiedener Empfindlichkeit unterteilt ist, dadurch gekennzeichnet, daß die Abdeckschichten (7) mit dem gleichen Indikator wie die Indikatorfläche (6) selbst imprägniert sind und erst bei Erreichen der Sättigungsabsorption für dieses Gas durchlässig werden und die Indikatorfläche (6) von den Abdeckschichten (7) durch einen Luftspalt (9) getrennt ist.

2. Plakette nach Anspruch 1, dadurch gekennzeichnet, daß die Indikatorkonzentration in den Abdeckschichten (7) und damit die Sättigungsabsorptionen abgestuft sind und die Abstufung entsprechend dem Meßbereichsumfang gewählt ist.

3. Plakette nach Anspruch 1 und 2, dadurch gekennzeichnet, daß die Plakette zwei Eintrittsfenster (3 und 4) für das Gas aufweist, wobei hinter dem ersten Fenster (3) die Indikatorfläche (6) offen liegt und hinter dem zweiten Fenster (4) eine einfache Abdeckschicht (7) oder mehrfach übereinander gelagerte Abdeckschichten (7) angeordnet sind.

4. Plakette nach Anspruch 3, dadurch gekennzeichnet, daß auch bei mehreren Abdeckschichten (7) die Abdeckschichten (7) durch einen Luftspalt (9) getrennt sind.

## Claims

1. Badge for rapid detection of a dose of a reactive gas or vapour, in particular of a noxious gas with delayed onset of action, based on an indicator surface (6) which undergoes a colour change under the influence of the gas or vapour and is sub-divided into measurement areas of differing sensitivity by being differently covered with covering layers (7), characterised in that the covering layers (7) are impregnated with the same indicator as the indicator surface (6) itself and do not become permeable to this gas until saturation absorption has been reached, and that the indicator surfaces (6) is separated from the covering layers (7) by an air gap (9).

2. Badge according to Claim 1, characterised in that the indicator concentrations in the covering layers (7) and hence the saturation absorptions are graduated and the graduation is selected according to the range of measurement.

3. Badge according to Claims 1 and 2, characterised in that the badge has two inlet windows (3 and 4) for the gas, the indicator surface (6) being exposed behind the first window (3) and a single covering layer (7) or several superimposed covering layers (7) being arranged behind the second window (4).

4. Badge according to Claim 3, characterised in that the covering layers (7) are separated by an air gap (9) also when several covering layers (7) are provided.

## Revendications

1. Plaquette destinée à reconnaître rapidement une dose d'un gaz ou d'une vapeur réactifs, en particulier un gaz nuisible à la santé ayant un effet retardé, sur la base d'une face indicatrice (6) qui se colore sous l'influence du gaz ou de la vapeur et qui est subdivisée par recouvrement distinct avec des couches d'un recouvrement (7) dans des zones de mesure de sensibilité différente, caractérisée en ce que les couches de recouvrement (7) sont imprégnées du même indicateur que la face indicatrice (6) elle-même et ne deviennent perméables que lorsque l'absorption de saturation pour ce gaz est atteinte et la face indicatrice (6) est séparée des couches de recouvrement (7) par l'intervalle d'air (9).

2. Plaquette selon la revendication 1, caractérisée en ce que les concentrations d'indicateur dans les couches de recouvrement (7) et donc les absorptions de saturation sont graduées et la graduation est choisie en fonction de l'importance de la zone de mesure.

3. Plaquette selon la revendication 1 et la revendication 2, caractérisée en ce qu'elle présente deux fenêtres d'entrée (3 et 4) pour le gaz, la face indicatrice (6) étant à découvert derrière la première fenêtre (3) et une couche de recouvrement simple (7) ou plusieurs couches de recouvrement (7) reposant les unes sur les autres étant disposées derrière la seconde fenêtre (4).

4. Plaquette selon la revendication 3, caractérisée en ce que, même lorsqu'il y a plusieurs couches de recouvrement (7), les couches de recouvrement (7) sont séparées par un intervalle d'air (9).

FIG. 2

FIG. 1

Durchschlagspunkt
(ppm min)

Konzentration der Imprägnierlösung

FIG. 3

Verfärbung

$C_S$

0    80    160    Dosis [ppm min]

7    9    7a
7b
6

I    II    III

FIG. 4

2